# EUROPÄISCHE PATENTSCHRIFT

(11) **EP 2 932 498 B1**
(45) Veröffentlichungstag und Bekanntmachung des Hinweises auf die Patenterteilung: **06.05.2020**
(21) Anmeldenummer: 13810925.1
(22) Anmeldetag: 12.12.2013
(51) Int. Cl.: G09F 13/04, H05B 33/08, H02J 9/00, G08B 7/06

(54) **ANORDNUNG ZUM BETREIBEN VON LICHTQUELLEN**
ARRANGEMENT FOR OPERATING LIGHT SOURCES
ENSEMBLE POUR FAIRE FONCTIONNER DES SOURCES DE LUMIÈRE

(30) Priorität: 13.12.2012 DE 202012104850 U
(43) Veröffentlichungstag der Anmeldung: 21.10.2015
(73) Patentinhaber: Zumtobel Lighting GmbH, 6850 Dornbirn (AT)
(72) Erfinder: PÖHS, Mario, A-6850 Dornbirn (AT)
(74) Vertreter: Thun, Clemens
(86) Internationale Anmeldenummer: PCT/EP2013/076345
(87) Internationale Veröffentlichungsnummer: WO 2014/090931

(56) Entgegenhaltungen:
- JP-A- H06 188 457
- US-A- 5 151 679
- US-A1- 2002 043 943
- US-A1- 2006 158 130
- US-A1- 2008 315 789
- US-A1- 2009 179 578
- US-A1- 2009 224 689
- US-A1- 2010 275 478
- US-A1- 2011 260 633
- US-A1- 2012 286 683
- US-B1- 6 294 983

## Beschreibung

Die vorliegende Erfindung betrifft eine Anordnung zum Betreiben von Lichtquellen, welche ein Betriebsgerät zur Stromversorgung der Lichtquellen sowie einen die Lichtquellen beinhaltenden und mit dem Betriebsgerät über zwei Leitungen verbundenen Ausgangskreis aufweist. Insbesondere betrifft die vorliegende Erfindung Notleuchten, mit deren Hilfe Rettungswege angezeigt und in bestimmten Situationen auch gezielt beleuchtet werden sollen.

Notleuchten dienen in erster Linie dazu, mit Hilfe eines beleuchteten Piktogramms einen Fluchtweg anzuzeigen. Bspw. werden derartige Notleuchten oberhalb der Ausgänge von Räumen montiert, um im Falle eines Notfalls Personen anzuzeigen, auf welchem Wege sie den Raum bzw. das Gebäude unmittelbar verlassen können. Üblicherweise sind derartige Notleuchten dauerhaft aktiv und oftmals mittels zusätzlicher Maßnahmen auch gegen Ausfälle der allgemeinen Stromversorgung abgesichert, so dass sie jederzeit, insbesondere auch bei einem Ausfall der allgemeinen Stromversorgung weiterhin das Piktogramm beleuchten können.

Darüber hinaus sind Notleuchten bekannt, welche zusätzlich auch eine Lichtabgabe derart bewirken, dass bspw. ein unterhalb der Notleuchte befindlicher Fluchtweg im Falle eines Notfalls, bei dem z.B. die allgemeine Raumbeleuchtung ausfällt, beleuchtet wird. Eine derartige sog. Escape Route Illumination (ERI) wird bspw. dadurch realisiert, dass an der Unterseite des Piktogramm-Gehäuses eine zusätzliche Lichtquelle mit einem ihr zugeordneten Lichtabstrahlelement angeordnet wird, über welches die Lichtabgabe in den gewünschten Bereich vorgenommen wird. Diese Escape Route Illumination wird dann allerdings nur im Falle eines tatsächlichen Notfalls aktiviert.

Bei Notleuchten mit ERI ist also eine Steuerung dahingehend erforderlich, dass die für die ERI verantwortliche Lichtquelle bzw. Lichtquellen lediglich in bestimmten Situationen aktiviert werden, während hingegen die zur Beleuchtung des Piktogramms verwendeten Lichtquellen dauerhaft aktiv bleiben sollen. Auch für diese Lichtquellen kann allerdings je nachdem, ob ein Notzustand vorliegt oder nicht, ein unterschiedlicher Betrieb vorgesehen sein, da bspw. aus Energieerspamisgründen im Fall eines Notzustands oftmals die Helligkeit des Piktogramms etwas reduziert wird. Eine entsprechende Schaltungsanordnung zum Betreiben der Lichtquellen erfordert also eine gewisse Intelligenz dahingehend, dass die Lichtquellen abhängig von bestimmten äußeren Einflüssen in unterschiedlicher Weise betrieben bzw. aktiviert oder deaktiviert werden können.

Das Integrieren einer derartigen Intelligenz in eine entsprechende Notleuchte stellt üblicherweise dann kein Problem dar, wenn es sich um eine sog. An- oder Einbauleuchte handelt. In diesem Fall ist das Piktogramm in der Regel unmittelbar mit dem Gehäuse für das Betriebsgerät zur Stromversorgung der Lichtquellen gekoppelt, sodass durch den Einsatz entsprechender Leitungen die Lichtquellen ohne größeren Aufwand in dem jeweils gewünschten Betriebsmodus betrieben werden können. Neben An- oder Einbauleuchten kommen oftmals allerdings auch Notleuchten in Form sog. abgependelter Leuchten zum Einsatz, bei denen die Aufhängung der Leuchte lediglich über zwei Stahlseile erfolgt. Genaugenommen ist hierbei das Gehäuse mit dem darin befindlichen Betriebsgerät zur Stromversorgung der Lichtquellen an der Decke eines Raums oder einem sonstigen Trägerelement befestigt, während hingegen das Piktogramm mit den Lichtquellen von dem Gehäuse für das Betriebsgerät getrennt und lediglich über zwei Stahlseile mit diesem verbunden ist. Die Stahlseile dienen dabei nicht nur der Aufhängung des Piktogramms sondern auch der Stromversorgung des an dem Piktogramm befindlichen Ausgangskreises mit den Lichtquellen. Bei einer derartigen abgependelten Leuchte stellt sich dann allerdings das Problem, dass aufgrund der Tatsache, dass lediglich zwei Leitungen zur Stromversorgung für die Lichtquellen zur Verfügung stehen, eine situationsbedingte Ansteuerung der Lichtquellen im Ausgangskreis nur schwer realisierbar ist. Eine Signalübertragung ist bei den lediglich zwei zur Verfügung stehenden Leitungen nur schwer bzw. nur mit einem hohen Aufwand realisierbar, weitere Steuerleitungen stehen nicht zur Verfügung. Bei abgependelten Notleuchten war deshalb bislang eine zusätzliche Escape Route Illumination bzw. ein situationsbedingtes Betreiben der Lichtquellen für die Piktogramm-Beleuchtung nicht vorgesehen.

US 2010/0275478 A1 offenbart eine Kombination aus Ausgangsschild und Notleuchte zur Lenkung der Aufmerksamkeit auf die Ausgänge in einem Gebäude.

Der vorliegenden Erfindung liegt die Aufgabenstellung zugrunde, die vorstehend genannten Probleme zu vermeiden und auch bei abgependelten Notleuchten die Möglichkeit zu eröffnen, wahlweise eine Escape Route Illumination zu aktivieren und/oder die zur Beleuchtung des Piktogramms vorgesehenen Lichtquellen situationsbedingt anzusteuern.

Die Aufgabe wird durch eine Anordnung zum Betreiben von Lichtquellen mit den Merkmalen des Anspruchs 1 bzw. den Merkmalen des Anspruchs 6 gelöst. Vorteilhafte Weiterbildungen der Erfindung sind Gegenstand der abhängigen Ansprüche.

Die erfindungsgemäß vorgeschlagene Lösung beruht auf dem grundsätzlichen Gedanken, die Ansteuerung der Lichtquellen im Ausgangskreis über eine Umpolung der von dem Betriebsgerät über die beiden Leitungen zur Verfügung gestellten Versorgungsspannung vorzunehmen. Das Betriebsgerät stellt hierbei eine im Wesentlichen konstante Versorgungspannung zur Verfügung, deren Polarität allerdings je nachdem, in welcher Weise die Lichtquellen im Ausgangskreis betrieben werden sollen, veränderbar ist.

Gemäß einer ersten erfindungsgemäßen Variante ist dabei vorgesehen, dass der Ausgangskreis derart ausgebildet ist, dass ein erster Teil der Lichtquellen bei beiden Polaritäten der Versorgungsspannung mit Strom versorgt wird, während hingegen ein zweiter Teil der Lichtquellen lediglich bei einer der beiden Polaritäten mit Strom versorgt wird. Für den Fall des Einsatzes der erfindungsgemäßen Anordnung in einer Notleuchte mit ERI bedeutet dies also, dass die Lichtquellen für die Piktogramm-Beleuchtung den ersten Teil der Lichtquellen darstellen, der bei beiden Polaritäten mit Strom versorgt wird, während hingegen die Lichtquellen für die ERI den zweiten Teil der Lichtquellen darstellen.

Gemäß einem ersten Aspekt der vorliegenden Erfindung wird dementsprechend eine Anordnung zum Betreiben von Lichtquellen mit einem Betriebsgerät zur Stromversorgung der Lichtquellen sowie einem die Lichtquellen beinhaltenden und mit dem Betriebsgerät über zwei Leitungen verbundenen Ausgangskreis vorgeschlagen, wobei das Betriebsgerät dazu ausgebildet ist, eine im Wesentlichen konstante Versorgungsspannung zur Verfügung zu stellen, deren Polarität veränderbar ist, und wobei der Ausgangskreis derart ausgebildet ist, dass ein erster Teil der Lichtquellen bei beiden Polaritäten der Versorgungsspannung mit Strom versorgt wird und ein zweiter Teil der Lichtquellen lediglich bei einer der beiden Polaritäten der Versorgungsspannung mit Strom versorgt wird.

Ein zweiter erfindungsgemäßer Gedanke beruht zunächst wiederum auf dem Konzept, dass das Betriebsgerät eine im Wesentlichen konstante Versorgungsspannung zur Verfügung stellt, deren Polarität veränderbar ist. Um nunmehr bspw. situationsbedingt die Helligkeit der Lichtquellen bzw. eines Teils der Lichtquellen im Ausgangskreis einzustellen, ist vorgesehen, dass der Ausgangskreis mit den Lichtquellen Mittel zum Einstellen eines im Wesentlichen konstanten Stroms aufweist, dessen Höhe von der Polarität der Versorgungsspannung abhängig ist. Dieser Gedanke, der selbstverständlich sowohl unabhängig als auch in Kombination mit dem oben beschriebenen ersten Erfindungsgedanken zum Einsatz kommen könnte, erlaubt also bspw. im Falle einer Notleuchte die Lichtquellen für die Piktogramm-Beleuchtung in ihrer Helligkeit einzustellen.

Dementsprechend wird gemäß diesem zweiten Aspekt der Erfindung eine Anordnung zum Betreiben von Lichtquellen mit einem Betriebsgerät zur Stromversorgung der Lichtquellen sowie einem die Lichtquellen beinhaltenden und mit dem Betriebsgerät über zwei Leitungen verbundenen Ausgangskreis vorgeschlagen, wobei das Betriebsgerät dazu ausgebildet ist, eine im Wesentlichen konstante Versorgungsspannung zur Verfügung zu stellen, deren Polarität veränderbar ist, und wobei der Ausgangskreis Mittel zum Einstellen eines im Wesentlichen konstanten Stroms aufweist, dessen Höhe von der Polarität der Versorgungsspannung abhängig ist.

Bei den im Ausgangskreis befindlichen Lichtquellen handelt es sich vorzugsweise um LEDs. Um in diesem Fall sicherzustellen, dass die bspw. für die Piktogramm-Beleuchtung vorgesehenen LEDs unabhängig von der Polarität der Versorgungsspannung aktiv sind, ist im Ausgangskreis ein Gleichrichter vorgesehen. Das Einstellen der Höhe des im Wesentlichen konstanten Stroms abhängig von der Polarität der Versorgungsspannung kann dann bspw. mit Hilfe eines durch einen Transistor realisierten Konstantstromreglers erfolgen, der in dem LED-Zweig angeordnet ist. Über eine an die Versorgungsleitungen angeschlossene Diode mit Auswerte-Schaltung kann dann dieser Transistor in entsprechender Weise angesteuert werden, um eine unterschiedliche Stromhöhe einzustellen. Alternativ hierzu wäre es allerdings auch denkbar, auf die Auswerte-Schaltung zu verzichten und stattdessen zwei Stromregler bzw. Transistoren in den Zweigen des Gleichrichters anzuordnen. Je nachdem, welche Polarität die Versorgungsspannung aufweist, ist dann einer der beiden Stromregler aktiv und stellt den Stromfluss durch die LEDs auf eine geeignete Höhe ein.

Der von der Polarität der Versorgungsspannung abhängige Betrieb weiterer LEDs - bspw. für eine ERI - kann beispielsweise dadurch realisiert werden, dass parallel zum Zweig mit den ersten LEDs und dem dazu gehörigen Gleichrichter ein zweiter Zweig vorgesehen ist, der die zweite Gruppe von LEDs beinhaltet. Durch die gleichrichtende Wirkung der LEDs bzw. eine zusätzlich in diesem Zweig angeordnete Diode ist sichergestellt, dass lediglich bei einer der beiden Polaritäten der Versorgungsspannung diese Lichtquellen aktiviert werden. Auch in diesem Zweig kann ein Regler zum Einstellen des Stroms in einer bestimmten Höhe vorgesehen sein, wobei dieser dann vorzugsweise aus Effizienzgründen in Form eines sog. Schaltreglers realisiert wird.

Letztendlich wird also mit der erfindungsgemäßen Lösung eine einfache und elegante Möglichkeit geschaffen, trotz der Verbindung zwischen Versorgungsgerät und Ausgangskreis über lediglich zwei Leitungen eine situationsbedingte Ansteuerung der in dem Ausgangsbereich befindlichen Lichtquellen vorzunehmen. Damit können in einfacher Weise nunmehr auch Notleuchten in abgependelter Form realisiert werden, die trotz allem eine Escape Route Illumination beinhalten.

Nachfolgend soll die Erfindung anhand der beiliegenden Zeichnung näher erläutert werden. Es zeigen:
- Figur 1: die Ansicht eines bevorzugten Anwendungsbeispiels der vorliegenden Erfindung in Form einer abgependelten Notleuchte mit ERI;
- Figur 2: ein erstes Ausführungsbeispiel einer erfindungsgemäßen Anordnung zum Betreiben der bei der Notleuchte vorgesehenen Lichtquellen und
- Figur 3: ein zweites Ausführungsbeispiel einer erfindungsgemäßen Anordnung.

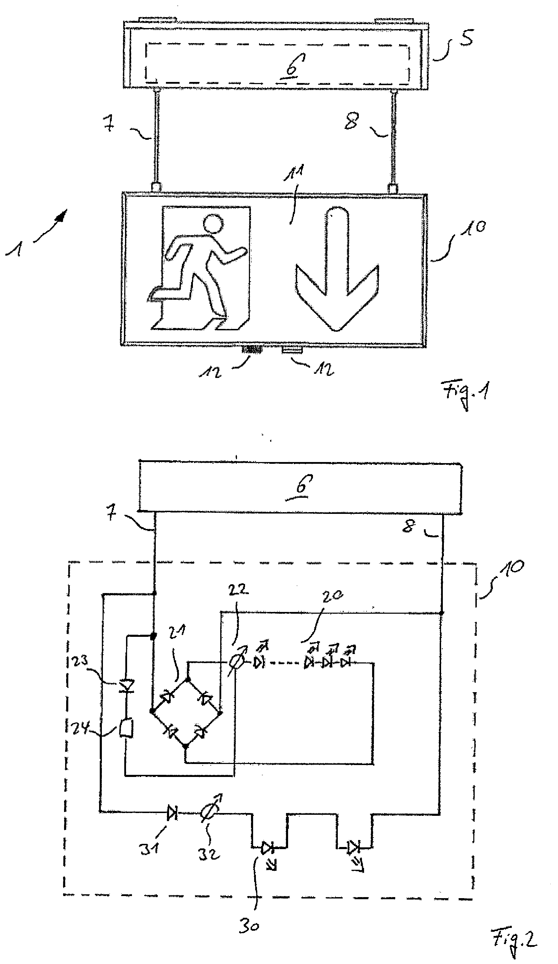

Figur 1 zeigt zunächst die seitliche Ansicht einer sog. abgependelte Notleuchte 1 die ein bevorzugtes Anwendungsbeispiel der vorliegenden Erfindung darstellt. Die Befestigung der Leuchte 1 erfolgt hierbei an einem - nicht dargestellten - Träger, bspw. an der Decke eines Raums, wobei an der Decke lediglich ein schmales, quaderförmiges Gehäuse 5 befestigt ist, in dem ein Betriebsgerät 6 zum Betreiben der Lichtquellen der Leuchte 1 angeordnet ist. Das Betriebsgerät 6, welches mit den Leitungen zur allgemeinen Stromversorgung verbunden ist, dient hierbei dazu, die vom Netz zur Verfügung gestellte Versorgungsspannung in einen geeigneten Strom bzw. eine geeignete Spannung zum Betrieb der Lichtquellen umzusetzen.

Die Lichtquellen selbst sind in einem zweiten Modul 10 angeordnet, welches abgependelt bzw. abgehängt an dem Gehäuse 5 befestigt ist. Die Aufhängung dieses zweiten Moduls 10 erfolgt hierbei über zwei Seile 7 und 8, welche aus einem elektrisch leitenden Material bestehen und zusätzlich auch der Übertragung der von dem Betriebsgerät 6 zur Verfügung gestellten Versorgungsspannung dienen. Weitere Verbindungen zwischen dem Betriebsgerät 6 und dem Modul 10 bestehen nicht, insbesondere sind keine zusätzlichen Leitungen zur Datenübermittlung oder dergleichen vorgesehen.

Das über die Seile bzw. Leitungen 7 und 8 aufgehängte Modul 10 dient primär der Anzeige eines Rettungswegs und weist hierzu in bekannter Weise eine oder zwei einander gegenüberliegend angeordnete lichtdurchlässige Scheiben auf, welche mit einem Piktogramm 11 versehen sind. Das Piktogramm zeigt die Richtung eines Fluchtwegs an und wird mittels in dem Modul 10 befindlichen Lichtquellen hinterleuchtet, wobei in der Regel das Piktogramm 11 dauerhaft beleuchtet werden soll.

Zusätzlich ist bei der Leuchte 1 von Figur 1 eine sog. Emergency Route Illumination (ERI) vorgesehen, die durch zwei an der Unterseite des Moduls 10 angeordnete Lichtquellen 12 und ggf. zugeordnete optische Elemente realisiert wird. Über diese Lichtquellen 12 und die ggf. vorhandene zusätzliche Optik wird Licht gezielt in einen Bereich unterhalb der Leuchte 1 abgegeben, um den darunter befindlichen Fluchtweg zu beleuchten.

Während allerdings das Piktogramm 11 dauerhaft, also auch für den Fall, dass kein Notfall vorliegt, beleuchtet werden soll, soll die Beleuchtung des Fluchtwegs über die zusätzlichen Lichtquellen 12 nur dann erfolgen, wenn tatsächlich ein Notfall vorliegt. Mit Hilfe der vorliegenden Erfindung wird eine einfache und elegante Möglichkeit geschaffen, trotz der Verbindung zwischen Betriebsgerät 6 und Modul 10 lediglich über die Leitungen 7 und 8 eine situationsbedingte Ansteuerung der verschiedenen Lichtquellen des Moduls 10 vornehmen zu können.

Figur 2 zeigt hierzu eine erste Variante einer erfindungsgemäßen Anordnung zum Betreiben der Lichtquellen der Leuchte, wobei davon ausgegangen wird, dass sowohl die Piktogramm-Beleuchtung als auch die ERI mit Hilfe von LEDs vorgenommen wird. In dem über die beiden Leitungen 7 und 8 mit dem Betriebsgerät 6 gekoppelten Ausgangskreis der Schaltungsanordnung, der in dem Piktogramm-Modul 10 realisiert wird, befinden sich also einerseits erste LEDs 20, die für die Piktogramm-Beleuchtung vorgesehen sind, sowie zumindest eine zweite LED 30, mit deren Hilfe die Emergency Route Illumination realisiert wird.

Um sicherzustellen, dass die LEDs 20 für die Piktogramm-Beleuchtung permanent, die mindestens eine LED 30 für die ERI allerdings nur in bestimmten Situationen angeschaltet sind, ist erfindungsgemäß in einem ersten Schritt vorgesehen, dass im Gegensatz zu bisherigen Lösungen, bei denen durch das Betriebsgerät 6 ein Konstantstrom über die Verbindungsleitungen 7 und 8 zur Verfügung gestellt wurde, nunmehr eine im Wesentlichen konstante Spannung dem Ausgangskreis zugeführt wird. Die Polarität der Spannung kann allerdings situationsbedingt von dem Betriebsgerät 6 eingestellt werden, sodass an der Leitung 7 wahlweise eine positive oder eine negative Spannung anliegt.

Ein von der Polarität der Versorgungsspannung unabhängiger Betrieb der ersten LEDs 20 wird dadurch sichergestellt, dass diesen LEDs 20 ein Gleichrichter 21 vorgeschaltet ist, wie dies in Figur 2 gezeigt ist. Unabhängig von der Polarität der Versorgungsspannung kann also aufgrund der Wirkungsweise des Gleichrichters 21 Strom in richtiger Richtung durch die LEDs 20 fließen, sodass eine dauerhafte Lichtabgabe zur Hinterleuchtung des Piktogramms ermöglicht wird.

Der zweite Zweig mit der mindestens einen zweiten LED 30 hingegen weist keinen derartigen Gleichrichter auf, sodass aufgrund der gleichrichtenden Wirkung der LED 30 bzw. einer zusätzlich in dem Zweig angeordneten Diode 31 nur dann Strom fließt, wenn an der Leitung 7 eine positive Spannung anliegt. Wird hingegen die Polarität der Versorgungsspannung vertauscht, so kann durch den Zweig mit der zweiten LED 30 kein Strom fließen und diese gibt kein Licht ab. Letztendlich bedeutet dies, dass durch das Versorgungsgerät 6 durch entsprechendes Wählen der Polarität der Versorgungsspannung eingestellt werden kann, ob beide LED-Gruppen 20, 30 aktiv sind oder lediglich die LEDs 20 für die Piktogramm-Beleuchtung.

Ein effizienter Betrieb der LEDs 20, 30 liegt insbesondere dann vor, wenn diese dauerhaft mit einem konstanten Strom betrieben werden. Sowohl der Zweig mit den ersten LEDs 20 als auch der Zweig mit der mindestens einen zweiten LED 30 weist dementsprechend in Serie zu den jeweiligen LEDs 20 bzw. 30 einen Stromregler 22 bzw. 32 auf, der die von dem Betriebsgerät 6 zur Verfügung gestellte im Wesentlichen konstante Versorgungsspannung in einen konstanten Strom wandelt. Dabei ist vorzugsweise der erste Stromregler 22 als Transistor ausgestaltet, während hingegen der zweite Stromregler 32 aus Effizienzgründen in Form eines Schaltreglers realisiert wird.

Die Ausführung des Stromreglers 22 für die erste LED-Gruppe 20 als steuerbaren Transistor bringt darüber hinaus den Vorteil mit sich, dass in verhältnismäßig einfacher Weise gemäß einer vorteilhaften Weiterbildung des soeben beschriebenen Grundprinzips der Erfindung die Helligkeit der ersten LED-Gruppe 20 verändert werden kann. So kann über einen parallel zum Gleichrichter verlaufenden Steuerzweig, der eine Diode 23 und einen Widerstand 24 beinhaltet, eine Ansteuerung des Transistors 22 vorgenommen werden. Wiederum kann hier mit Hilfe der Diode 23 eine Bewertung der Polarität der Versorgungsspannung vorgenommen werden, d.h., die Ansteuerung des Transistors 22 erfolgt abhängig von der Polarität der Versorgungsspannung. Dies kann dann dazu genutzt werden, dass die Helligkeit der LEDs 20 bzw. die Höhe des durch die LEDs 20 fließenden Stroms mit Hilfe des Stromreglers 22 abhängig von der Polarität gewählt wird, wobei vorzugsweise vorgesehen ist, dass die Höhe des Stroms für den Fall, dass die zweite LED 30 für die Emergency Route Illumination aktiv ist, etwas reduziert wird. Das Piktogramm wird also im Falle eines Notfalls etwas geringer beleuchtet, um durch die entsprechende Energieersparnis beispielsweise einen längeren Batterie-Betrieb zu ermöglichen.

Zu erwähnen ist in diesem Zusammenhang, dass das Konzept der polaritätsabhängigen Regelung der Stromhöhe für die ersten LEDs 20 auch unabhängig davon zum Einsatz kommen könnte, ob eine zweite LED-Gruppe zur Realisierung einer ERI vorhanden ist. Auch hier wirkt sich in positiver Weise das der Erfindung zugrunde liegende Basiskonzept aus, nämlich eine Versorgungsspannung mit wahlweiser Polarität zur Verfügung zu stellen.

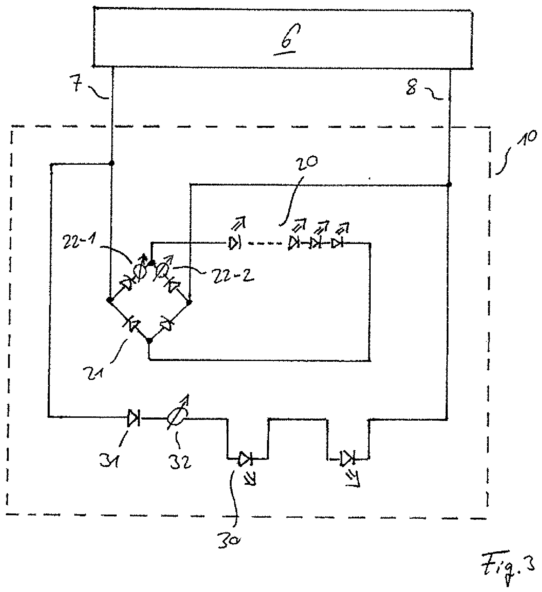

Eine alternative Ausführungsform zu der Schaltungsanordnung gemäß Figur 2 ist in Figur 3 gezeigt, wobei sich diese Variante in erster Linie im Hinblick auf die Frage der Einstellung der Helligkeit der ersten LED-Gruppe 20 abhängig von der Polarität der Versorgungsspannung unterscheidet. Es ist nunmehr kein separater Zweig zur Ansteuerung eines Stromreglers vorgesehen, wie dies bei der Variante gemäß Figur 2 der Fall war. Stattdessen sind nunmehr in den beiden Zweigen des Brücken-Gleichrichters 21 zwei Stromregler 22-1 bzw. 22-2 vorgesehen. Je nachdem, welche Polarität die Versorgungsspannung aufweist, fließt nur durch eine dieser beiden Zweige Strom und dementsprechend ist auch nur der jeweils entsprechende Stromregler 22-1 oder 22-2 aktiv. Beide Stromregler 22-1, 22-2 müssen also lediglich derart ausgelegt werden, dass sie für den Fall, dass Strom durch sie fließt, den Strom auf eine geeignete Höhe einstellen.

Letztendlich wird also durch die erfindungsgemäße Anordnung in einfacher Weise die Möglichkeit geschaffen, trotz Verbindung über lediglich zwei Leitungen zwischen einem Betriebsgerät und einem Ausgangskreis mit mehreren Lichtquellen die Lichtquellen ohne die Übermittlung zusätzlicher Steuersignale situationsbedingt anzusteuern. Dies eröffnet insbesondere die Möglichkeit, auch bei abgependelten Notleuchten eine Emergency Route Illumination zu realisieren und/oder die Helligkeit der Piktogramm-Beleuchtung einzustellen.

## Patentansprüche

1. Anordnung zum Betreiben von Lichtquellen (20, 30) mit einem Betriebsgerät (6) zur Stromversorgung der Lichtquellen (20, 30) sowie einem die Lichtquellen (20, 30) beinhaltenden und mit dem Betriebsgerät (6) lediglich über zwei Leitungen (6, 7) verbundenen Ausgangskreis,
wobei das Betriebsgerät (6) dazu ausgebildet ist, eine im Wesentlichen konstante Versorgungsspannung zur Verfügung zu stellen, deren Polarität veränderbar ist,
und wobei der Ausgangskreis derart ausgebildet ist, dass ein erster Teil der Lichtquellen (20) bei beiden Polaritäten der Versorgungsspannung mit Strom versorgt wird und ein zweiter Teil der Lichtquellen (30) lediglich bei einer der beiden Polaritäten der Versorgungsspannung mit Strom versorgt wird.

2. Anordnung nach Anspruch 1,
**dadurch gekennzeichnet,**
**dass** dem ersten Teil der Lichtquellen (20) ein Gleichrichter vorgeschaltet ist.

3. Anordnung nach Anspruch 1 oder 2,
**dadurch gekennzeichnet,**
**dass** in einem den zweiten Teil der Lichtquellen (30) beinhaltenden Zweig des Ausgangskreises eine Diode (31) angeordnet ist.

4. Anordnung nach Anspruch 3,
**dadurch gekennzeichnet,**
**dass** in dem den zweiten Teil der Lichtquellen (30) beinhaltenden Zweig des Ausgangskreises ein Stromregler (32) angeordnet ist, der vorzugsweise als Schaltregler ausgeführt ist.

5. Anordnung nach einem der vorherigen Ansprüche,
**dadurch gekennzeichnet,**
**dass** der Ausgangskreis Mittel zum Einstellen eines im Wesentlichen konstanten Stroms für die erste Gruppe der Lichtquellen (20) aufweist, dessen Höhe von der Polarität der Versorgungsspannung abhängig ist.

6. Anordnung zum Betreiben von Lichtquellen (20, 30) mit einem Betriebsgerät (6) zur Stromversorgung der Lichtquellen (20, 30) sowie einem die Lichtquellen (20, 30) beinhaltenden und mit dem Betriebsgerät (6) lediglich über zwei Leitungen (6, 7) verbundenen Ausgangskreis,
wobei das Betriebsgerät (6) dazu ausgebildet ist, eine im Wesentlichen konstante Versorgungsspannung zur Verfügung zu stellen, deren Polarität veränderbar ist,
und wobei der Ausgangskreis Mittel zum Einstellen eines im Wesentlichen konstanten Stroms für die Lichtquellen aufweist, dessen Höhe von der Polarität der Versorgungsspannung abhängig ist.

7. Anordnung nach Anspruch 6,
**dadurch gekennzeichnet,**
**dass** den Lichtquellen ein Gleichrichter (21) vorgeschaltet ist.

8. Anordnung nach einem der Ansprüche 5 bis 7,
**dadurch gekennzeichnet,**
**dass** den Lichtquellen bzw. der ersten Gruppe der Lichtquellen (20) ein steuerbarer Stromregler (22) vorgeschaltet ist, der vorzugsweise als Transistor ausgeführt ist.

9. Anordnung nach Anspruch 8,
**dadurch gekennzeichnet,**
**dass** die Ansteuerung des Stromreglers (22) über einen mit einer der beiden Leitungen (7, 8) verbundenen Steuerzweig erfolgt, der eine Diode (23) beinhaltet.

10. Anordnung nach Anspruch 2 und Anspruch 5 oder nach Anspruch 7,
**dadurch gekennzeichnet,**
**dass** in zwei Zweigen des Gleichrichters (21) jeweils ein Stromregler (22-1, 22-2) angeordnet ist.

11. Anordnung nach einem der vorherigen Ansprüche,
**dadurch gekennzeichnet,**
**dass** es sich bei den Lichtquellen um LEDs handelt.

12. Leuchte mit mehreren Lichtquellen und einer Anordnung nach einem der vorherigen Ansprüche.

13. Leuchte nach Anspruch 12,
**dadurch gekennzeichnet,**
**dass** es sich um eine Notleuchte handelt.

## Claims

1. Arrangement for operating light sources (20, 30) with an operating device (6) for supplying power to the light sources (20, 30), and with an output circuit containing the light sources (20, 30) and connected to the operating device (6) via only two lines (6, 7),
wherein the operating device (6) is designed to provide an essentially constant supply voltage whose polarity can be varied,
and wherein the output circuit is designed such that a first part of the light sources (20) is supplied with current at both polarities of the supply voltage, and a second part of the light sources (30) is supplied with current only at one of the two polarities of the supply voltage.

2. Arrangement according to claim 1,
**characterized in that**
a rectifier is connected upstream of the first part of the light sources (20).

3. Arrangement according to claim 1 or 2,
**characterized in that**
a diode (31) is arranged in a branch of the output circuit containing the second part of the light sources (30).

4. Arrangement according to claim 3,
**characterized in that**
a current regulator (32), which is preferably designed as a switching regulator, is arranged in the branch of the output circuit containing the second part of the light sources (30).

5. Arrangement according to one of the preceding claims,
**characterized in that**
the output circuit has means for setting an essentially constant current for the first group of light sources (20), the level of current of which depends upon the polarity of the supply voltage.

6. Arrangement for operating light sources (20, 30) with an operating device (6) for supplying power to the light sources (20, 30), and with an output circuit containing the light sources (20, 30) and connected to the operating device (6) via only two lines (6, 7),
wherein the operating device (6) is designed to provide an essentially constant supply voltage whose polarity can be varied,
and wherein the output circuit has means for setting an essentially constant current for the light sources, the level of which current depends upon the polarity of the supply voltage.

7. Arrangement according to claim 6,
**characterized in that**
a rectifier (21) is connected upstream of the light sources.

8. Arrangement according to one of claims 5 through 7,
**characterized in that**
a controllable current regulator (22), which is preferably designed as a transistor, is connected upstream of the light sources or of the first group of light sources (20).

9. Arrangement according to claim 8,
**characterized in that**
the control of the current regulator (22) takes place by means of a control branch which is connected to one of the two lines (7, 8) and which contains a diode (23).

10. Arrangement according to claim 2 and claim 5 or according to claim 7,
**characterized in that**
a current regulator (22-1, 22-2) is arranged in each of two branches of the rectifier (21).

11. Arrangement according to one of the preceding claims,
**characterized in that**
the light sources are LED's.

12. Lighting unit having several light sources and an arrangement according to one of the preceding claims.

13. Lighting unit according to claim 12,
**characterized in that**
it is an emergency lamp.

## Revendications

1. Agencement pour faire fonctionner des sources de lumière (20, 30), comprenant un appareil de fonctionnement (6) pour l'alimentation en courant des sources de lumière (20, 30) ainsi qu'un circuit de sortie contenant les sources de lumière (20, 30) et connecté à l'appareil de fonctionnement (6) via seulement deux câbles (6, 7),
l'appareil de fonctionnement (6) étant conçu pour fournir une tension d'alimentation essentiellement constante, dont la polarité est variable,
et le circuit de sortie étant conçu de telle manière qu'une première partie des sources de lumière (20) est alimentée en courant aux deux polarités de la tension d'alimentation et une deuxième partie des sources de lumière (30) est alimentée en courant uniquement lors d'une des deux polarités de la tension d'alimentation.

2. Agencement selon la revendication 1,
**caractérisé en ce que**
un redresseur est branché en amont de la première partie des sources de lumière (20).

3. Agencement selon la revendication 1 ou 2,
**caractérisé en ce que**
une diode (31) est disposée dans une branche du circuit de sortie contenant la deuxième partie des sources de lumière (30).

4. Agencement selon la revendication 3,
**caractérisé en ce que**
un régulateur de courant (32), lequel est réalisé de préférence comme un régulateur de commutation, est disposé dans la branche du circuit de sortie contenant la deuxième partie des sources de lumière (30).

5. Agencement selon l'une quelconque des revendications précédentes, **caractérisé en ce que**
le circuit de sortie présente des moyens pour le réglage d'un courant essentiellement constant pour le premier groupe des sources de lumière (20), dont le niveau dépend de la polarité de la tension d'alimentation.

6. Agencement pour faire fonctionner des sources de lumière (20, 30), comprenant un appareil de fonctionnement (6) pour l'alimentation en courant des sources de lumière (20, 30) ainsi qu'un circuit de sortie contenant les sources de lumière (20, 30) et connecté à l'appareil de fonctionnement (6) via seulement deux câbles (6, 7),
l'appareil de fonctionnement (6) étant conçu pour fournir une tension d'alimentation essentiellement constante, dont la polarité est variable,
et le circuit de sortie présentant des moyens pour le réglage d'un courant essentiellement constant pour les sources de lumière, dont le niveau dépend de la polarité de la tension d'alimentation.

7. Agencement selon la revendication 6,
**caractérisé en ce que**
un redresseur (21) est branché en amont des sources de lumière.

8. Agencement selon l'une quelconque des revendications 5 à 7,
**caractérisé en ce que**
un régulateur de courant (22) pouvant être commandé, lequel est réalisé de préférence comme un transistor, est branché en amont des sources de lumière ou du premier groupe des sources de lumière (20).

9. Agencement selon la revendication 8,
**caractérisé en ce que**
la commande du régulateur de courant (22) s'effectue à travers une branche de commande connectée à un des deux câbles (7, 8), laquelle contient une diode (23).

10. Agencement selon la revendication 2 et la revendication 5 ou selon la revendication 7,
**caractérisé en ce que**
un régulateur de courant (22-1, 22-2) est disposé dans chacune des deux branches du redresseur (21).

11. Agencement selon l'une quelconque des revendications précédentes,
**caractérisé en ce que**
les sources de lumière sont des DEL.

12. Lampe comprenant plusieurs sources de lumière et un agencement selon l'une quelconque des revendications précédentes.

13. Lampe selon la revendication 12,
**caractérisé en ce que**
il s'agit d'une lampe de secours.
